# FASCICULE DE BREVET EUROPEEN

(11) **EP 1 004 407 B1**
(45) Date de publication et mention de la délivrance du brevet: **24.09.2003**
(21) Numéro de dépôt: 99402909.8
(22) Date de dépôt: 23.11.1999
(51) Int. Cl.: B25J 9/16, G05B 19/404

(54) **Dispositif de compensation des effets des déformations d'un pylône de sustentation disposé entre un porteur et une charge**
Vorrichtung zur Kompensation der Verformungseffekte eines Trägerpylon zwischen einem Träger und einer Last
Device for compensating the deformation effects of a pylon between a carrier and a load

(30) Priorité: 27.11.1998 FR 9814984
(43) Date de publication de la demande: 31.05.2000
(73) Titulaire: Thales, 75008 Paris (FR)
(72) Inventeur: Moreau, Dominique, 94117 Arcueil cedex (FR)
(74) Mandataire: Albert, Claude

(56) Documents cités:
- EP-A- 0 159 269
- EP-A- 0 242 858
- US-A- 4 829 876
- US-A- 4 906 907
- US-A- 5 327 347
- US-A- 5 408 758
- US-A- 5 488 872

## Description

L'invention concerne un dispositif de compensation des effets des déformations d'un pylône de sustentation disposé entre un porteur et une charge, la charge supportée par le pylône étant par exemple une munition (de type bombe ou missile) ou une nacelle comportant par un exemple un dispositif d'imagerie infrarouge. Le dispositif s'applique à un système de contrôle de l'orientation d'un axe pouvant subir ces effets de déformation du pylône, par exemple un axe de tir de la munition ou un axe de visée du dispositif d'imagerie.

L'imagerie infrarouge est largement utilisée aujourd'hui sur les avions de combat en tant qu'aide à la navigation, à l'atterrissage ou à l'appontage. Le dispositif d'imagerie est par exemple intégré dans une nacelle (ou 'pod' selon l'expression anglo-saxonne) embarquée sur le porteur au moyen d'un pylône de sustentation qui la supporte. Pour des raisons évidentes de pilotage, l'image infrarouge doit pouvoir se superposer, avec une résolution inférieure à celle de l'oeil, à la vision directe du pilote et éventuellement, dans le cas d'aide à l'atterrissage, à la piste synthétique fournie par l'ILS (abréviation de l'expression anglo-saxonne 'Instrument Landing System'). Toutes les images sont présentées sur un écran frontal ou H.U.D. (abréviation de l'expression anglo-saxonne 'Head Up Display').

La non superposition de ces images résulte principalement des mouvements de rotation selon les 3 axes de la nacelle sous l'avion, dus aux déformations du pylône qui la supporte, désharmonisant ainsi la ligne de visée du dispositif d'imagerie avec celle du H.U.D. On peut distinguer deux composantes aux rotations de la nacelle. Une composante dite dynamique, due aux déformations du pylône et/ou de la nacelle et résultant de leurs modes propres de vibrations ainsi que des fluctuations dues aux turbulence aérodynamiques. Une composante dite statique, continûment variable, due aux déformations du pylône résultant des charges subies par celui-ci. Ces charges comprennent les effets des efforts aérodynamiques supportés essentiellement par la nacelle et les effets dus à des facteurs de charge.

La plupart des nacelles existantes, de formes symétriques, sont assez peu soumises aux variations d'efforts aérodynamiques. Leur masse assez faible permet d'optimiser les structures afin de minimiser les effets des déformations du pylône sur l'orientation de la ligne de visée dans une plage où ceux-ci pourront être corrigés exclusivement en dynamique; par exemple par une chaîne d'asservissement comprenant typiquement un gyroscope mesurant les écarts de la ligne de visée et un mécanisme de stabilisation opto-mécanique et/ou électronique de la voie optique.

Cependant, les nouvelles générations de nacelles font apparaître des formes dissymétriques, avec par exemple des méplats de surface importante, et sont soumises à des efforts aérodynamiques beaucoup plus importants, générant des charges accrues sur le pylône. Or les systèmes classiques utilisant des gyroscope ne peuvent compenser la composante statique des rotations, due à ces charges. On pourrait, pour diminuer ces charges, alourdir le pylône pour le rendre plus raide; mais cela va contre le souci constant de diminuer le poids total du porteur. On pourrait aussi, connaissant les structures du pylône et des charges supportées par celui-ci, calculer les efforts aérodynamiques auxquels sont soumises ces charges au moyen de modèles. Mais ces modèles, fort complexes du fait dé la diversité des conditions opérationnelles, demanderaient de très longs et coûteux essais en vol, afin d'en déterminer tous les paramètres.

Le dispositif selon l'invention propose de compenser les effets des déformations du pylône sur l'orientation d'un axe pouvant subir ces effets, par exemple la ligne de visée précédemment évoquée, grâce à des capteurs de contrainte implantés dans la structure du pylône, et dont les réponses sont fonction notamment des charges subies par ce pylône (par exemple des jauges de contrainte). Ces réponses sont traitées afin de déterminer, par comparaison avec une base de tabulation préétablie, en particulier la valeur de la composante statique d'une ou de plusieurs rotations subies par l'axe.

Plus précisément, l'invention concerne un dispositif de compensation des effets des déformations d'un pylône de sustentation disposé entre un porteur et une charge, pour au moins un système de contrôle de l'orientation d'un axe prédéterminé pouvant subir lesdits effets. Le dispositif est caractérisé en ce qu'il comprend:
- un nombre prédéterminé de capteurs de contrainte implantés dans la structure du pylône, les réponses de ces capteurs étant fonction des charges subies par le pylône,
- un module de traitement de ces réponses permettant, par comparaison à une base de tabulation préétablie, de déterminer la valeur de la composante statique d'au moins une rotation subie par l'axe, due aux déformations du pylône subissant lesdites charges, cette valeur étant envoyée vers le système de contrôle afin d'effectuer une compensation de la rotation subie par l'axe.

Le dispositif selon l'invention a l'avantage, outre sa simplicité et sa fiabilité, d'éviter des essais en vol dont il serait délicat d'exploiter les résultats; la base de tabulation, en effet, est établie au sol. Il ne s'oppose pas en outre à la mise en place de pylône de plus faible poids. D'autres avantages de l'invention apparaîtront à la lecture de la description d'une forme d'exécution qui suit, illustrée par les figures annexées qui représentent:
- les figures 1a et 1b, des schémas illustrant la non superposition des images sur un HUD,
- la figure 2, un schéma illustrant selon un exemple, la mise en place d'un pylône de sustentation entre un porteur et une charge,
- la figure 3, un exemple de mise en oeuvre du dispositif selon l'invention dans l'exemple de la figure 2,
- la figure 4, un schéma illustrant un exemple de détermination de la base de tabulation.

Sur ces figures, les éléments homologues sont référencés par les mêmes repères.

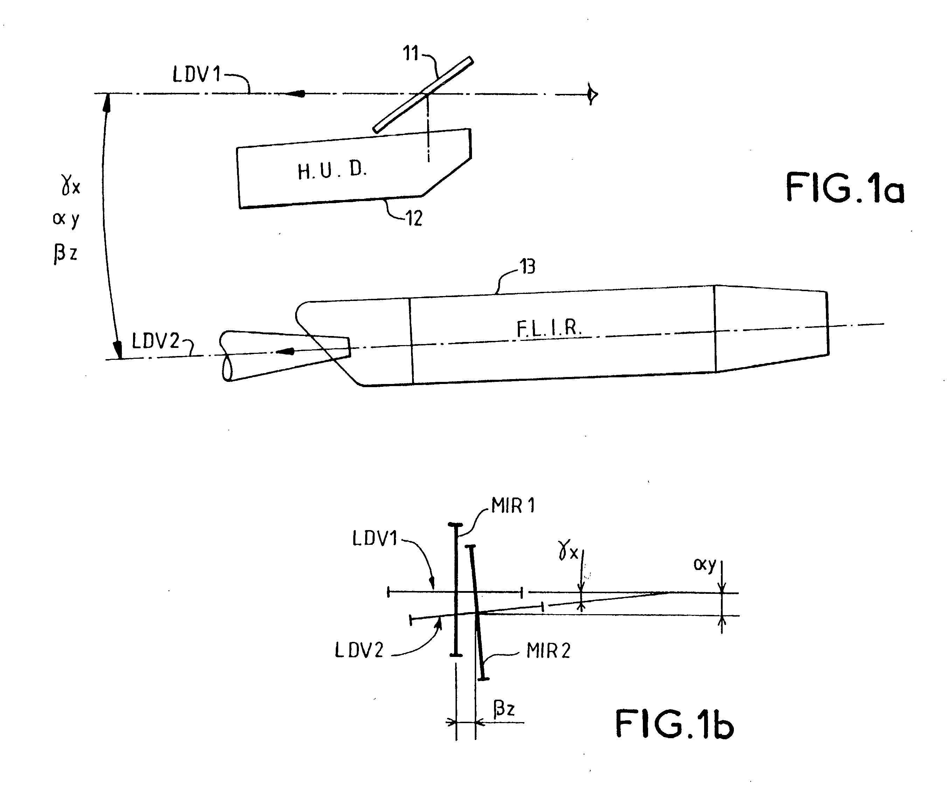

Les figures 1a et 1b illustrent un exemple de non superposition des images sur un écran frontal pour un pilote à bord d'un porteur. Grâce à des moyens optiques 11, le pilote est en mesure de visualiser à la fois ce qu'il perçoit directement (ligne de visée LDV1), d'éventuelles informations synthétiques fournies par le H.U.D. 12 et les informations fournies par une caméra infrarouge 13 ou FLIR (abréviation de l'expression anglo-saxonne 'Forward Looking Infra Red') dont l'axe de visée est notée LDV2. On suppose par exemple que le FLIR est monté dans une nacelle, supportée par un pylône de sustentation en dessous du porteur. Les déformations du pylône dues en particulier aux charges subies par celui-ci peuvent avoir pour effet des rotations de la ligne de visée LDV2 selon 3 axes, ces rotations étant le roulis (noté ici γx), le tangage (noté αy) et le lacet (noté βz). Sur l'écran du pilote, schématisé sur la figure 1b où sont représentées deux mires MIR1 et MIR2 symbolisant deux images centrées respectivement sur les axes de visée LDV1 et LDV2, ces rotations se traduisent notamment par des translations des images (αy et βz), extrêmement gênantes pour le pilotage.

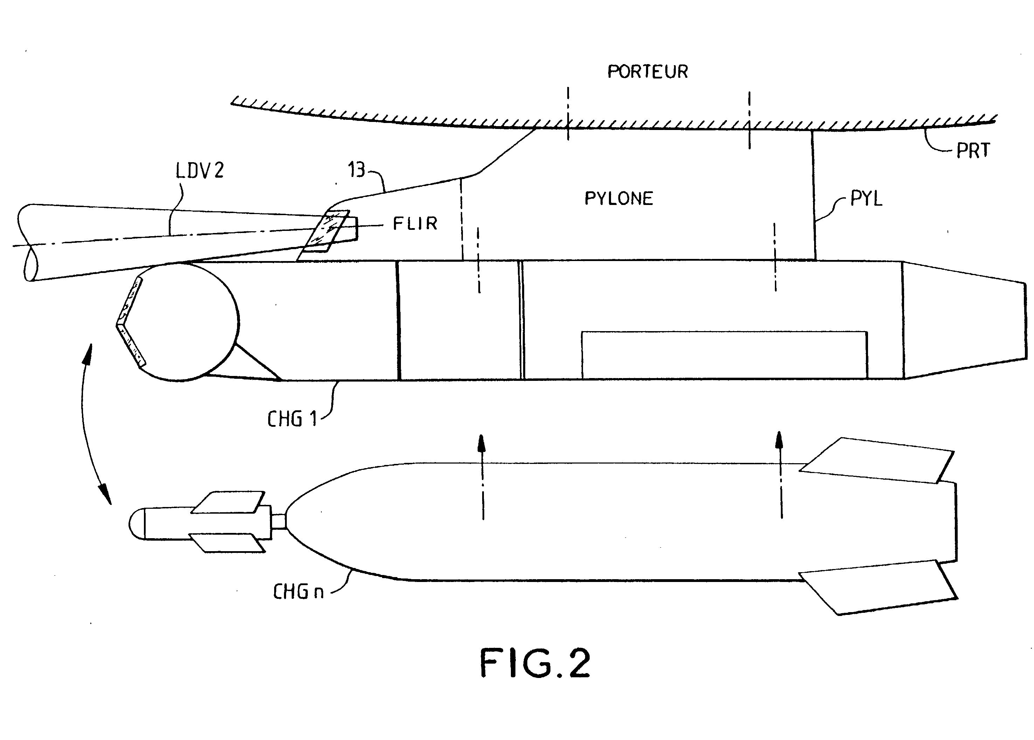

L'invention propose de pallier ce type d'inconvénient. Pour illustrer le fonctionnement du dispositif selon l'invention, la figure 2 représente un exemple de mise en place d'un pylône de sustentation PYL entre un porteur PRT et une charge. Cette charge est par exemple une nacelle CHG1, telle que décrite précédemment, ou une munition CHGn; cette munition peut être de différent type (bombe, roquette, missile, etc.). Dans l'exemple choisi, le FLIR 13 de ligne de visée LDV2 est intégré dans le pylône de sustentation lui-même, ce qui permet d'exploiter au mieux le volume de ce pylône. Les effets des déformations du pylône peuvent se faire sentir sur l'orientation de l'axe de visée du FLIR (ou de toute autre voie optique), placé dans le pylône, ou sur un axe de visée d'une voie optique intégrée dans la nacelle, comme cela a été précédemment expliqué. Les déformations du pylône peuvent également entraîner des effets sur l'orientation de l'axe de tir de la munition CHGn. En effet, le tir de la munition est commandé par un système de contrôle appartenant généralement au système de navigation et d'attaque ou SNA; si l'axe de tir de la munition est soumis à des rotations dues aux déformations du pylône, le calcul de l'orientation de l'axe de tir par ce système de contrôle risque d'être faussé. Les déformations du pylône peuvent aussi entraîner des effets sur l'orientation d'un axe lié au porteur, comme son axe de route par exemple. En effet, l'orientation de cet axe est souvent calculé par des commandes de vol, qui permettent de maintenir un cap, et ce calcul peut être faussé par des déformations du pylône se répercutant sur la cellule du porteur et pouvant générer du lacet, principalement.

Le dispositif selon l'invention permet de compenser les effets des déformations de ce pylône, et concerne un ou plusieurs systèmes de contrôle de l'orientation d'un axe pouvant subir ces effets. Comme nous l'avons vu, cet axe peut être un axe de visée d'une voie optique, un axe de tir d'une munition sustentée par le pylône, un axe lié au porteur, etc. La compensation peut porter suivant la configuration sur une ou plusieurs rotations subies par l'axe. Plus précisément, le dispositif selon l'invention permet de déterminer notamment la composante statique d'une ou de plusieurs rotations subies par l'axe, due aux déformations du pylône soumis à des charges. Pour cela, il comporte un nombre prédéterminé de capteurs implantés dans la structure du pylône, les réponses de ces capteurs étant fonction notamment des charges subies par le pylône. Ces réponses sont envoyés vers un module de traitement qui, après comparaison avec une base de tabulation préétablie, permet de déterminer la valeur de la ou des composantes statiques. Ces valeurs sont ensuite envoyées vers le système de contrôle afin d'effectuer une compensation des rotations subies par l'axe.

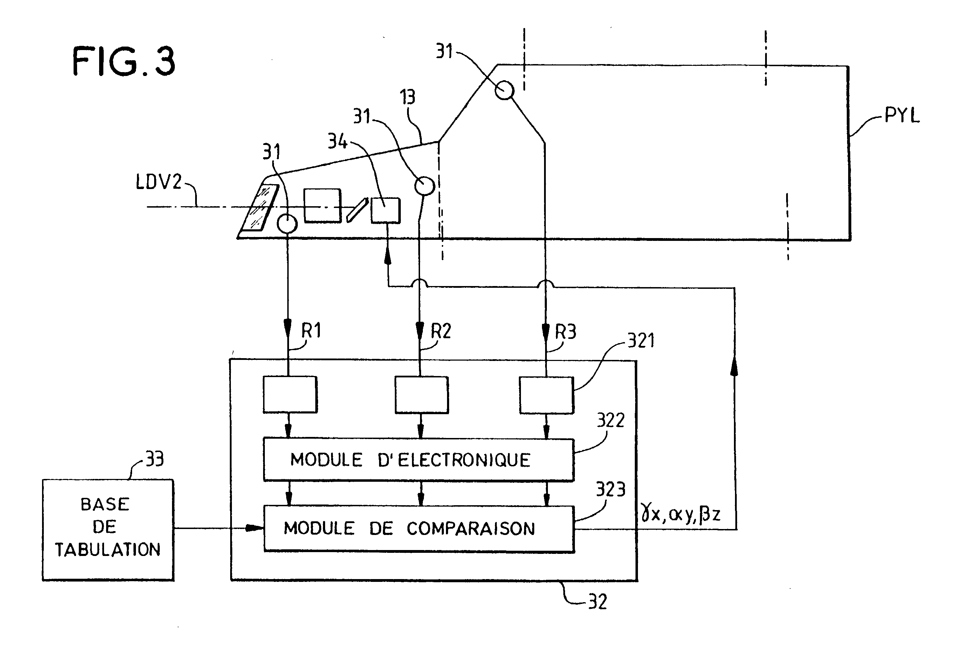

La figure 3 illustre un exemple de mise en oeuvre du dispositif selon l'invention lorsqu'une voie optique de type FLIR est intégrée dans le pylône, comme dans l'exemple de la figure 2. On cherche ici à compenser les effets des déformations du pylône PYL sur l'orientation de la ligne de visée LDV2 du FLIR 13. Dês capteurs de contrainte 31 sont implantés dans la structure du pylône. Dans l'exemple choisi, il y en a trois, par exemple un pour chaque rotation. Il pourrait aussi être nécessaire d'en disposer plusieurs par rotation. Certains types de capteurs, dits bi-axiaux ou tri-axiaux, permettent de déterminer les rotations respectivement selon 2 ou 3 axes, ce qui permet de diminuer de nombre de capteurs. Les réponses des capteurs R1, R2, R3 sont envoyées vers le module de traitement 32. Elles sont généralement amplifiées au moyen d'amplificateurs 321. Ces capteurs, de type connu, sont par exemple des jauges de contrainte résistives, dont les réponses sont classiquement amplifiées au moyen d'amplificateurs de tension, ou des capteurs piézo-électriques amplifiés au moyen d'amplificateurs de charge. Un module d'électronique réalise les compensations nécessaires (dérives dans le temps, température), puis numérise les réponses au moyen d'un convertisseur analogique numérique. En pratique, tout le module de traitement peut être intégré dans le pylône lui-même. Les réponses numérisées sont alors envoyées vers un module de comparaison 323 qui permet de déterminer, par comparaison avec une base de tabulation 33 préétablie selon des méthodes expliquées par la suite, les rotations yx, αy, βz. Ces rotations sont alors fournies au système de contrôle 34 de l'axe de visée LDV2. En l'occurrence, il peut s'agir d'un mécanisme de stabilisation opto-mécanique ou une stabilisation électronique par exemple.

Les capteurs sont choisis pour pouvoir déterminer la composante statique des rotations. Les jauges de contrainte résistives en particulier, sont particulièrement bien adaptées. Mais leur bande passante est telle que, dans une certaine mesure, ces capteurs permettent également de déterminer la composante dynamique des rotations subies par l'axe lorsque le pylône est soumis à des vibrations, par exemple. Si la fréquence des vibrations est trop importante, les capteurs piézo-électriques, ou la combinaison de ces deux types de capteurs seront mieux adaptés pour déterminer à la fois la composante statique et la composante dynamique.

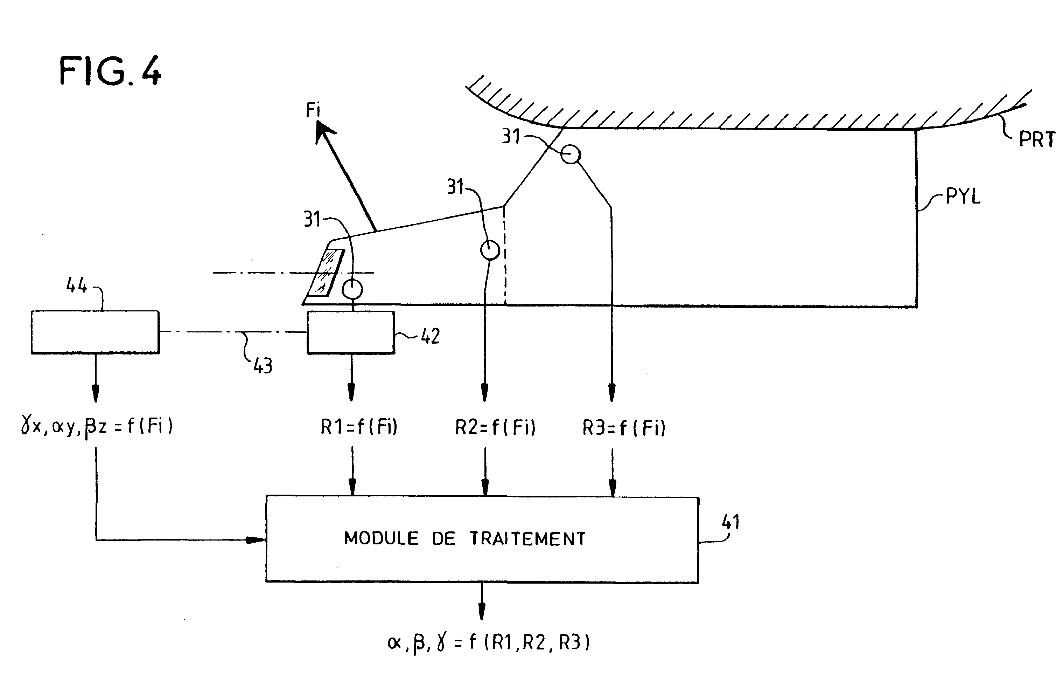

La figure 4 illustre une méthode permettant d'établir la base de tabulation 33, et ce, au sol. La tabulation consiste à soumettre au sol le pylône PYL dans la structure duquel sont implantés les capteurs de contrainte 31, à des efforts externes caractéristiques des charges supportées, symbolisés sur la figure 4 par la flèche Fi; ces efforts sont pré-calculés dans la plage de domaine de vol définie pour ce pylône. Bien entendu, lors de l'application des forces, sont respectés les moments fléchissants et les efforts tranchants induits sur le pylône et dus à une charge déterminée. Les réponses des capteurs aux efforts Fi, notés ici R1, R2, R3, sont envoyés vers un module 41 de traitement. Parallèlement, on mesure, par des moyens connus, les rotations subies par une ligne de visée de référence, liée à l'axe pouvant subir les effets des déformations du pylône. Par exemple, on peut utiliser un système optique 42, fixé sous le pylône et définissant une ligne de visée de référence 43. ce système, par exemple un miroir ou un réticule collimaté permet, au moyen d'un collimateur 44, de déterminer les rotations subies par la ligne de visée de référence. Ces rotations (ici les trois rotations yx, αy, βz) sont également fonctions des efforts Fi. Elles sont envoyées dans le module 41 de traitement. Pour chaque étape de montée en effort, on note la valeur de chaque rotation en fonction des valeurs des réponses des capteurs 31. On détermine alors les lois de tabulation donnant les valeurs des rotations en fonction des réponses des capteurs, ces lois pouvant être linéarisées, puisque les contraintes mécaniques restent dans le domaine élastique des matériaux employés. La base de tabulation ainsi formée est alors utilisée, en vol, pour compenser les effets des déformations du pylône grâce au dispositif de compensation selon l'invention.

Notons par ailleurs une autre application intéressante de la présence des capteurs de contrainte 31 dans le pylône. Elle permet d'effectuer en outre un contrôle de vieillissement des structures. En effet, en enregistrant les réponses des capteurs en fonction du temps, on peut réaliser un histogramme du temps d'utilisation et des efforts subis, permettant de calculer la fatigue global du pylône.

## Revendications

1. Dispositif de compensation des effets des déformations d'un pylône de sustentation (PYL) disposé entre un porteur (PRT) et une charge (CHG1, CHGn), pour au moins un système de contrôle (34) de l'orientation d'un axe prédéterminé (LDV2) pouvant subir lesdits effets, **caractérisé en ce que** le dispositif comprend
- un nombre prédéterminé de capteurs de contrainte (31) implantés dans la structure du pylône, les réponses (R1, R2, R3) de ces capteurs étant fonction des charges subies par le pylône,
- un module (32) de traitement de ces réponses permettant, par comparaison à une base de tabulation (33) préétablie, de déterminer la valeur de la composante statique d'au moins une rotation (γx,αy,βz) subie par l'axe, due aux déformations du pylône subissant lesdites charges, cette valeur étant envoyée vers le système de contrôle afin d'effectuer une compensation de la rotation subie par l'axe.

2. Dispositif selon la revendication 1, **caractérisé en ce que** les réponses des capteurs étant fonction en outre des vibrations subies par le pylône, le module de traitement permet aussi de déterminer la valeur de la composante dynamique de la rotation subie par l'axe, due notamment aux déformations du pylône subissant ces vibrations, les valeurs des composantes statiques et dynamiques étant alors envoyées vers le système de contrôle afin d'effectuer une compensation de la rotation subie par l'axe.

3. Dispositif selon les revendications 1 ou 2, la charge sustentée par le pylône étant une munition (CHGn), un système de contrôle faisant partie d'un système de navigation et d'attaque du porteur, et permettant le contrôle de l'orientation d'un axe de tir de la munition, le dispositif étant **caractérisé en ce que** la ou les valeurs des composantes de la rotation subie par l'axe de tir sont envoyées vers le système de contrôle afin d'effectuer la compensation de cette rotation.

4. Dispositif selon les revendications 1 ou 2, la charge sustentée par le pylône étant une nacelle (CHG1) comportant au moins une voie optique définissant un axe de visée dont l'orientation est contrôlée par un système de contrôle, **caractérisé en ce que** la ou les valeurs des composantes de la rotation subie par l'axe de visée sont envoyées vers le système de contrôle afin d'effectuer la compensation de cette rotation.

5. Dispositif selon l'une des revendications précédentes, le porteur comprenant un système de contrôle de l'orientation d'un axe lié audit porteur, **caractérisé en ce que** la ou les valeurs des composantes de la rotation subie par ledit axe sont envoyées vers le système de contrôle afin d'effectuer la compensation de cette rotation.

6. Dispositif selon l'une des revendications précédentes, **caractérisé en ce qu'**au moins une voie optique définissant un axe de visée (LDV2) est intégrée dans le pylône lui-même, un système de contrôle (34) permettant le contrôle de l'orientation de cet axe, et **caractérisé en ce que** la ou les valeurs des composantes de la rotation subie par l'axe de visée sont envoyées vers le système de contrôle afin d'effectuer la compensation de cette rotation.

7. Dispositif selon l'une des revendications précédentes, **caractérisé en ce qu'**une partie au moins des capteurs (31) sont des jauges de contrainte résistives, le module de traitement comportant notamment un amplificateur des tensions délivrées par ces jauges.

8. Dispositif selon l'une des revendications précédentes, **caractérisé en ce qu'**une partie au moins des capteurs (31) sont des capteurs de contrainte piezo-électriques, le module de traitement comportant notamment un amplificateur des charges délivrées par ces capteurs.

9. Dispositif selon l'une des revendications précédentes, **caractérisé en ce que** la base de tabulation (33) est établie au sol, en soumettant le pylône (PYL) à des efforts externes (Fi) caractéristiques des charges supportées, en traitant les réponses (R1, R2, R3) des capteurs de contrainte (31) avec les rotations subies par une ligne de visée de référence (43) liée à l'axe pouvant subir les effets des déformations du pylône, afin d'en déduire des lois de tabulation donnant les valeurs des rotations en fonction des réponses des capteurs.

10. Dispositif selon l'une ces revendications précédentes, **caractérisé en ce que** les réponses (R1, R2, R3) des capteurs de contrainte (31) sont enregistrées en fonction du temps afin d'effectuer un contrôle de vieillissement des structures.

## Patentansprüche

1. Vorrichtung zur Kompensation der Verformungseffekte eines Trägerpylons (PYL), der zwischen einem Träger (PRT) und einer Last (CHG1, CHGn) angeordnet ist, für zumindest ein Steuersystem (34) zum Steuern der Ausrichtung einer vorbestimmten Achse (LDV2), welche den genannten Effekten unterliegen kann, **dadurch gekennzeichnet, dass** die Vorrichtung enthält:
- eine vorbestimmte Anzahl an in der Struktur des Pylons eingesetzten Spannungsfiihlern (31), wobei die Signale (R1, R2, R3) dieser Fühler Funktion der Lasten sind, welchen der Pylon unterliegt,
- ein Modul (32) zum Verarbeiten dieser Signale, das es durch Vergleich mit einer vorerstellten Tabulationsbasis (33) ermöglicht, den Wert der statischen Komponente zumindest einer Verdrehung (γx, αy, βz) zu bestimmen, welcher die Achse unterliegt und die auf die Verformungen des den genannten Lasten unterliegenden Pylons zurückzuführen ist, wobei dieser Wert dem Steuersystem zugeleitet wird, um eine Kompensation der Verdrehung durchzuführen, welcher die Achse unterliegt.

2. Vorrichtung nach Anspruch 1, **dadurch gekennzeichnet, dass** bei Signale der Fühler, die ferner Funktion der Vibrationen sind, welchen der Pylon unterliegt, das Verarbeitungsmodul es auch ermöglicht, den Wert der dynamischen Komponente der Verdrehung zu bestimmen, welcher die Achse unterliegt und insbesondere auf die Verformungen des diesen Vibrationen unterliegenden Pylons zurückzuführen ist, wobei die Werte der statischen und der dynamischen Komponenten dann dem Steuersystem zugeleitet werden, um eine Kompensation der Verdrehung durchzuführen, welcher die Achse unterliegt.

3. Vorrichtung nach Anspruch 1 oder 2, wobei die vom Pylon getragene Last eine Munition (CHGn) ist, wobei ein Steuersystem Bestandteil eines Navigationsund Angriffssystems des Trägers ist und das Steuern der Ausrichtung einer Schussachse der Munition ermöglicht, wobei die Vorrichtung **dadurch gekennzeichnet ist, dass** der oder die Werte der Komponenten der Verdrehung, welcher die Schussachse unterliegt, dem Steuersystem zugeleitet werden, um die Kompensation dieser Verdrehung durchzuführen.

4. Vorrichtung nach Anspruch 1 oder 2, wobei die vom Pylon getragene Last eine Gondel (CHG1) ist, die zumindest eine optische Bahn aufweist, welche eine Zielachse definiert, deren Ausrichtung vom Steuersystem gesteuert wird, **dadurch gekennzeichnet, dass** der oder die Werte der Komponenten der Verdrehung, welcher die Zielachse unterliegt, dem Steuersystem zugeleitet werden, um die Kompensation dieser Verdrehung durchzuführen.

5. Vorrichtung nach einem der vorangehenden Ansprüche, wobei der Träger ein Steuersystem zum Steuern der Ausrichtung einer mit dem genannten Träger verbundenen Achse enthält, **dadurch gekennzeichnet, dass** der oder die Werte der Komponenten der Verdrehung, welcher die genannte Achse unterliegt, dem Steuersystem zugeleitet werden, um die Kompensation dieser Verdrehung durchzuführen.

6. Vorrichtung nach einem der vorangehenden Ansprüche, **dadurch gekennzeichnet, dass** zumindest eine eine Zielachse (LDV2) definierende optische Bahn im Pylon selbst integriert ist, wobei ein Steuersystem (34) das Steuern der Ausrichtung dieser Achse ermöglicht, und dass der oder die Werte der Komponenten der Verdrehung, welcher die Zielachse unterliegt, dem Steuersystem zugeleitet werden, um die Kompensation dieser Verdrehung durchzuführen.

7. Vorrichtung nach einem der vorangehenden Ansprüche, **dadurch gekennzeichnet, dass** zumindest ein Teil der Fühler (31) Widerstands-Dehnungsmessstreifen sind, wobei das Verarbeitungsmodul insbesondere einen Verstärker für die von diesen Dehnungsmessstreifen abgegebenen Spannungen enthält.

8. Vorrichtung nach einem der vorangehenden Ansprüche, **dadurch gekennzeichnet, dass** zumindest ein Teil der Fühler (31) piezoelektrische Lastfühler sind, wobei das Verarbeitungsmodul insbesondere einen Lastverstärker der von diesen Fühlern abgegebenen Ladungen enthält.

9. Vorrichtung nach einem der vorangehenden Ansprüche, **dadurch gekennzeichnet, dass** die Tabulationsbasis (33) am Boden erstellt wird, indem der Pylon (PYL) externen Kräften (Fi) ausgesetzt wird, die charakteristisch für die getragenen Lasten sind, indem die Signale (R1, R2, R3) der Lastfühler mit den Verdrehungen verarbeitet werden, welchen eine Bezugsziellinie (43) unterliegt, die mit der Achse verbunden ist, welche den Verformungseffekten des Pylons unterliegen kann, um daraus auf Tabulationsgesetzmäßigkeiten zu schließen, welche die Werte der Verdrehungen in Abhängigkeit von den Signale der Fühler wiedergeben.

10. Vorrichtung nach einem der vorangehenden Ansprüche, **dadurch gekennzeichnet, dass** die Signale (R1, R2, R3) der Lastfühler (31) in Abhängigkeit von der Zeit aufgenommen werden, um eine Alterungsprüfung der Strukturen durchzuführen.

## Claims

1. Device for compensating for the effects of deformation of a support pylon (PYL) arranged between a carrier (PRT) and a load (CHG1, CHGn) for at least one system (34) for controlling the orientation of a predetermined axis (LDV2) likely to be subjected to the said effects, **characterized in that** the device comprises
- a predetermined number of strain sensors (31) embedded in the structure of the pylon, the responses (R1, R2, R3) of these sensors being dependent on the loads experienced by the pylon,
- a processing module (32) for processing these responses making it possible, by comparison with a preestablished tabulation database (33), to determine the value of the static component of at least one rotation (γx,αy,βz) experienced by the axis. as a result of deformations of the pylon experiencing the said loads, this value being sent to the control system so that the rotation experienced by the axis can be compensated for.

2. Device according to Claim 1, **characterized in that** the responses of the sensors being also a function of the vibrations experienced by the pylon, the processing module is also able to determine the value of the dynamic component of the rotation experienced by the axis as a result in particular of deformations of the pylon experiencing these vibrations, the values of the static and dynamic components then being sent to the control system so that the rotation experienced by the axis can be compensated for.

3. Device according to Claims 1 or 2, the load supported by the pylon being a munition (CHGn), a control system forming part of a navigation and attack system belonging to the carrier and allowing the orientation of an axis or line of fire of the munition to be controlled, the device being **characterized in that** the value or values of the components of the rotation experienced by the line of fire are sent to the control system so that this rotation can be compensated for.

4. Device according to Claims 1 or 2, the load supported by the pylon being a pod (CHG1) comprising at least one optical path defining an axis or line of sight the orientation of which is controlled by a control system, **characterized in that** the value or values of the components of the rotation experienced by the line of sight are sent to the control system so that this rotation can be compensated for.

5. Device according to one of the preceding claims, the carrier comprising a system for controlling the orientation of an axis associated with the said carrier, **characterized in that** the value or values of the components of the rotation experienced by the said axis are sent to the control system so that this rotation can be compensated for.

6. Device according to one of the preceding claims, **characterized in that** at least one optical path defining an axis or line of sight (LDV2) is incorporated into the pylon itself, a control system (34) allowing the orientation of this axis to be controlled, and **characterized in that** the value or values of the components of the rotation experienced by the line of sight are sent to the control system so that this rotation can be compensated for.

7. Device according to one of the preceding claims, **characterized in that** at least some of the sensors (31) are resistive strain gauges, the processing module in particular comprising an amplifier amplifying the voltages delivered by these gauges.

8. Device according to one of the preceding claims, **characterized in that** at least some of the sensors (31) are piezoelectric strain sensors, the processing module in particular comprising an amplifier amplifying the charges delivered by these sensors.

9. Device according to one of the preceding claims, **characterized in that** the tabulation database (33) is devised on the ground, by subjecting the pylon (PYL) to external forces (Fi) characteristic of the loads supported, by processing the responses (R1, R2, R3) from the strain sensors (31) with the rotations experienced by a reference line of sight (43) associated with the axis likely to experience the effects of the deformations of the pylon, so as to deduce from this tabulation laws that give the values of the rotations as a function of the responses of the sensors.

10. Device according to one of the preceding claims, **characterized in that** the responses (R1, R2, R3) from the strain sensors (31) are logged as a function of time so that the ageing of the structures can be monitored.
